# EUROPÄISCHE PATENTANMELDUNG

(11) **EP 0 572 805 A2**
(43) Veröffentlichungstag der Anmeldung: **08.12.1993**
(21) Anmeldenummer: 93107025.4
(22) Anmeldetag: 30.04.1993
(51) Int. Cl.: H02H 7/093, H02H 3/00, H02H 3/20, H02H 5/00

(54) **Schleichdrehzahlüberwachung für Antriebe in Druckmaschinen**

(30) Priorität: 08.05.1992 DE 4215369
(71) Anmelder: KOENIG & BAUER-ALBERT AKTIENGESELLSCHAFT, D-97080 Würzburg (DE)
(72) Erfinder: Leuerer, Dietrich, W-8700 Würzburg (DE)

(57) **Zusammenfassung**

Bei einer Schaltungsanordnung zur Schleichdrehzahlüberwachung für Antriebe in Rotationsdruckmaschinen mit Gleichstrom-Nebenschlußmotoren besteht die Aufgabe darin, die Einhaltung einer frei wählbaren, vorgegebenen Drehzahl, z. B. im Tippbetrieb zu sichern und bei unzulässigen Drehzahlabweichungen die Maschine abzuschalten.

Erfindungsgemäß geschieht dies dadurch, daß parallel zur Ankerwicklung des Motors ein Spannungsüberwachungsrelais mit einem Öffnerkontakt vorgesehen ist, daß der Öffnerkontakt beim Überschreiten einer vorgegebenen Grenzspannung den Steuerstromkreis unterbricht.

## Beschreibung

Die Erfindung betrifft eine Schaltungsanordnung zur Schleichdrehzahlüberwachung für Antriebe in Rotationsdruckmaschinen mit Gleichstrommotoren entsprechend dem Oberbegriff des Patentanspruches 1.

Der Antrieb von Druckmaschinen erfolgt in der Regel über Gleichstrom-Nebenschlußmotoren, deren Drehzahleinstellung durch Änderung der Ankerspannung erfolgt. Hierbei wird lediglich die Ankerspannung gesteuert, während das Feld konstant erregt bleibt.

Es sind z. B. für den Tippbetrieb bei Druckmaschinen zwecks Einstellarbeiten an den Zylindern Sicherheitseinrichtungen bzw. Überwachungseinrichtungen bekannt, die teilweise serienmäßig im Thyristorsteller enthalten sind, beispielsweise Feldstromüberwachung und Tachoüberwachung. Darüberhinaus muß aus Sicherheitsgründen eine weitere Überwachung vorhanden sein, womit die Drehzahl der Druckmaschine bzw. die Umfangsgeschwindigkeit der Zylinder unabhängig von den Bauteilen des Thyristorreglers bei Tippbetrieb überwacht wird. So sind Sicherheitseinrichtungen bekannt, bei denen über einen sogenannten Schleppfehler zwischen Soll- und Istwert innerhalb einer programmierbaren Steuerung die Drehzahlüberwachung der Druckmaschine erfolgt. Dabei werden beispielsweise Tachogeneratoren für die Istwerterfassung der Drehzahl eingesetzt.

Nachteilig hierbei ist, daß bei einem Windungsschluß des Tachogenerators eine zu hohe Maschinendrehzahl von der programmierbaren Steuerung nicht als Fehler erkannt wird, was zu Verletzungen der hantierenden Person führen kann.

Der Erfindung liegt die Aufgabe zugrunde, eine gattungsgemäße Schaltungsanordnung zu schaffen, die die Einhaltung einer frei wählbaren Drehzahl sichert und bei unzulässigen Drehzahlüberschreitungen die Maschine selbsttätig abschaltet.

Erfindungsgemäß wird diese Aufgabe durch das Kennzeichen des Patentanspruches 1 und 2 gelöst.

Die bei der Anwendung der Erfindung erzielbaren Vorteile bestehen insbesondere darin, daß die Drehzahl des fremderregten Gleichstrom-Nebenschlußmotors ohne den Einsatz von zusätzlichen Einrichtungen direkt aus der Ankerspannung erkannt wird, so daß bei einer unzulässigen Drehzahlabweichung ein sofortiger Stillstand der Maschine ausgelöst wird. Dies ist besonders beim Tippbetrieb von Vorteil, bei welchem die Bedienperson zwischen den Druckzylindern hantiert. Es ist auch möglich, mit der erfindungsgemäßen Schaltungsanordnung jede andere vorgegebene Drehzahl zu überwachen.

Die Erfindung soll nachstehend an zwei Ausführungsbeispielen näher erläutert werden. In den zugehörigen Zeichnungen zeigen
Fig. 1 das Prinzipschaltbild der erfindungsgemäßen Drehzahlüberwachung;
Fig. 2 ein zweites Ausführungsbeispiel.

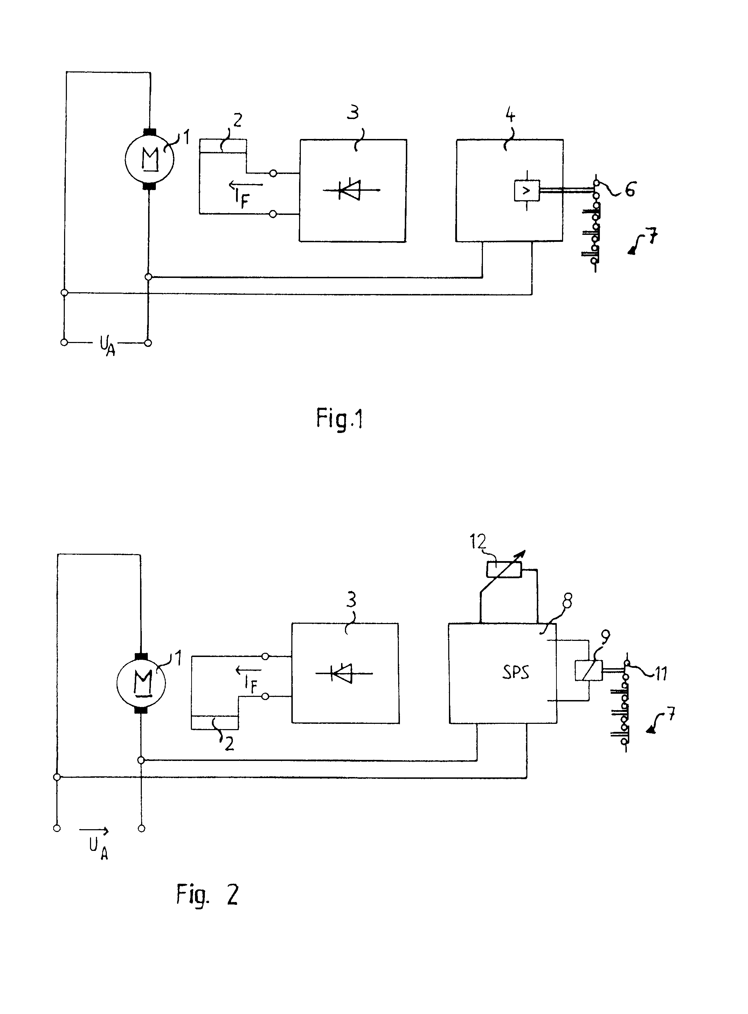

Entsprechend Fig. 1 besteht der fremderregte Gleichstrom-Nebenschlußmotor aus einer Ankerwicklung 1 und einer Feldwicklung 2. An der Ankerwicklung 1 liegt die Ankerspannung U_{A} an. Die Feldwicklung 2 ist mit einem Thyristorsteller 3 zwecks Feldstromstabilisierung verbunden. Es fließt der Feldstrom I_{F}. Parallel zur Ankerwicklung 1 ist ein Spannungsüberwachungsrelais 4 angeordnet, so daß dies ebenfalls an der Ankerspannung U_{A} liegt. Das Spannungsüberwachungsrelais 4 weist einen Öffnerkontakt 6 auf, der mit dem Steuerstromkreis 7 der Druckmaschine verbunden ist. Das Spannungsüberwachungsrelais 4 wird über eine nicht dargestellte Skala mit Ankerspannungsangabe auf einen Wert eingestellt, bei dessen Überschreitung beim Betriebszustand Tippbetrieb der Öffnerkontakt 6 den Steuerstromkreis 7 der Druckmaschine unterbricht.

Bekannterweise ist die Motordrehzahl proportional der Ankerspannung, verringert um den ohmschen Spannungsabfall im Anker und der Ankerrückwirkung, und ist umgekehrt proportional dem magnetischen Fluß des Motors. Da der Erregerstrom konstant gehalten wird und zusätzlich über die Feldstromüberwachung kontrolliert wird, und die Ankerrückwirkung und der Spannungsabfall im Anker bei gleichem Belastungsmoment gleich bleibt, kann man sagen, daß die Drehzahl eines fremderregten Gleichstrom-Nebenschlußmotors direkt aus seiner Ankerspannung umrechenbar ist. Aus diesen Gründen ist einer bestimmten Maschinen- bzw. Motordrehzahl eine bestimmte Ankerspannung zuordenbar.

Entsprechend Fig. 2 ist eine zweite Ausführungsvariante dargestellt. Hier ist ebenfalls ein fremderregter Gleichstrom-Nebenschlußmotor, bestehend aus einer Ankerwicklung 1 und einer Feldwicklung 2 gezeigt, wobei die Feldwicklung 2 wiederum zwecks Feldstabilisierung mit einem Thyristorsteller 3 verbunden ist. Parallel zur Ankerwicklung 1 ist eine bekannte, frei programmierbare Maschinensteuerung 8 angeordnet, so daß diese ebenfalls über einen A/D-Wandler an der Ankerspannung U_{A} liegt.Die Maschinensteuerung 8 ist mit einem Ausgangsrelais 9 versehen, welches einen Öffnerkontakt 11 aufweist, der mit dem Steuerstromkreis 7 der Druckmaschine verbunden ist. Die Ankerspannung U_{A}, beim Tippbetrieb beispielsweise 5 V bei einer Nennspannung von 400 V, wird in die vorhandene Maschinensteuerung 8 über eine Vergleicherschaltung, z. B. über ein Potentiometer 12 eingegeben, wo per Programm dieser Schwellwert berücksichtigt wird. Bei Überschreitung dieses Schwellwertes wird ebenfalls bei bestimmten Betriebszuständen, z. B. Tippbetrieb, der Steuerstromkreis 7 der Druckmaschine unterbrochen, was zur Abschaltung des Maschinenantriebes führt.

### Teileliste

1 Ankerwicklung
2 Feldwicklung
3 Thyristorsteller
4 Spannungsüberwachungsrelais
5 -
6 Öffnerkontakt
7 Steuerstromkreis
8 Maschinensteuerung, programmierbar 9 Ausgangsrelais
10 -
11 Öffnerkontakt
12 Potentiometer
U_{A} Ankerspannung
I_{F} Feldstrom

## Patentansprüche

1. Schaltungsanordnung zur Schleichdrehzahlüberwachung eines fremderregten Gleichstrom-Nebenschlußmotors für Antriebe in Rotationsdruckmaschinen, insbesondere für Tippbetrieb, dadurch gekennzeichnet, daß parallel zur Ankerwicklung (1) des Gleichstrom-Nebenschlußmotors (1; 2) ein Spannungsüberwachungsrelais (4) mit einem Öffnerkontakt (6) angeordnet ist, daß der Öffnerkontakt (6) beim Überschreiten eines beim Schleichgang zulässigen vorgegebenen Grenzspannungswertes einen Steuerstromkreis (7) der Maschine unterbricht.

2. Verfahren zur Schleichdrehzahlüberwachung für einen fremderregten Gleichstrom-Nebenschlußmotor in Antrieben für Rotationsdruckmaschinen, insbesondere für Tippbetrieb, dadurch gekennzeichnet, daß die Ankerspannung (U_{A}) der Ankerwicklung (1) als Istwert in eine Vergleicherschaltung einer programmierbaren Maschinensteuerung (8) fortlaufend eingegeben wird, daß der Vergleicherschaltung der Wert der Soll-Spannung zugeführt wird, daß ein ständiger Soll-Istwertvergleich vorgenommen wird, daß beim Überschreiten einer der Soll-Schleichdrehzahl entsprechenden Soll-Spannung die programmierbare Maschinensteuerung (8) ein Relais (9) ansteuert, dessen Kontakt (11) in einen Steuerstromkreis (7) einwirkt und diesen unterbricht.
